# EUROPEAN PATENT APPLICATION

(11) **EP 4 371 730 A1**
(43) Date of publication of application: **22.05.2024**
(21) Application number: 22841848.9
(22) Date of filing: 10.06.2022
(51) Int. Cl.: B29C 45/16, B29C 45/17, B29C 45/40, B29C 45/64, B29C 33/22, B29C 33/44

(54) **MOLD CLAMPING DEVICE AND INJECTION MOLDING MACHINE**

(30) Priority: 16.07.2021 JP 2021117659
(71) Applicant: The Japan Steel Works, Ltd., Tokyo 141-0032 (JP)
(72) Inventor: MITANI Souma, Tokyo 141-0032 (JP)
(74) Representative: Grünecker Patent- und Rechtsanwälte PartG mbB
(86) International application number: PCT/JP2022/023551
(87) International publication number: WO 2023/286504

(57) **Abstract**

The present invention relates to a mold clamping device (2) that includes: a fixed platen (5); a movable platen (7) configured to move closer toward or away from the fixed platen (5); a rotary platen (4) provided on one platen of the fixed platen (5) and the movable platen (7), to which a mold is attachable; and an extrusion device (10) provided on the one platen and configured to extrude a molded article from the mold. The rotary platen (4) is disposed at a side of a surface of the one platen facing the other platen to face the one platen and is provided to be rotatable via a bearing structure (36). The extrusion device (10) is disposed on a surface of the one platen opposite to the surface facing the other platen. The bearing structure (36) is configured to bear the rotary platen (4) at a position away from a rotation center in a radial direction. The extrusion device (10) is provided with an ejector rod (37) that protrudes radially inward than the bearing structure (36).

## Description

### TECHNICAL FIELD

The present invention relates to a mold clamping device including a rotary platen that rotates a mold and an extrusion device that extrudes a molded article, and an injection molding machine.

### BACKGROUND ART

A mold clamping device provided in an injection molding machine includes a fixed platen and a movable platen that is opened and closed with respect to the fixed platen. In an injection molding machine provided with a rotary platen for rotating a mold, for example, as described in Patent Literature 1, the rotary platen is provided on one surface of the movable platen, and a plurality of molds, that is, rotary-side molds are attached to the rotary platen. When the molds are clamped, one of the plurality of rotary-side molds is clamped with a fixed-side mold attached to the fixed platen. When a rotation position of the rotary platen is changed and the molds are clamped, another rotary-side mold is clamped with the fixed-side mold.

### CITATION LIST

### Patent Literature

Patent Literature 1: JP2009-45939A

### SUMMARY OF INVENTION

### TECHNICAL PROBLEM

The rotary platen includes a rotary shaft. The rotary shaft is inserted into a through hole formed at the center of the movable platen. As described above, the rotary platen is provided on the one surface of the movable platen, while a drive mechanism for driving the rotary platen is provided on the other surface of the movable platen. The drive mechanism rotates the rotary shaft to rotate the rotary platen.

The mold clamping device includes an extrusion device to extrude a finished molded article. The extrusion device is provided on the movable platen. The extrusion device is configured such that one or a plurality of ejector rods protrude from rod holes passing through the movable platen. In the case where the rotary platen is provided on the movable platen, the rotary shaft of the rotary platen is provided at the center of the movable platen. As a result, the ejector rod cannot protrude from the vicinity of the center of the movable platen, that is, from the vicinity of the center of the rotary platen. That is, there is a problem that a protruding position of the ejector rod is restricted.

In view of the above problems, an object of the present disclosure is to provide a mold clamping device in which a rotary platen is provided and an ejector rod can protrude from any arbitrary location.

Other problems and novel features will become apparent from description of the present description and the accompanying drawings.

### SOLUTION TO PROBLEM

The present inventors have found that the above problems can be solved by adopting the following configurations. That is, a rotary platen and an extrusion device are provided to one platen of a fixed platen and a movable platen. The rotary platen is provided to the one platen at a side of a surface facing the other platen, and the extrusion device is provided on an opposite surface thereof. A bearing structure is provided between the rotary platen and the one platen. The bearing structure is configured to bear the rotary platen at a position away from a rotation center in a radial direction. An ejector rod is provided radially inward than the bearing structure.

A solution to the above problem is as follows.
<1> A mold clamping device including:
   a fixed platen;
   a movable platen configured to move closer toward or away from the fixed platen;
   a rotary platen provided on one platen of the fixed platen and the movable platen, a mold being attachable to the rotary platen; and
   an extrusion device provided on the one platen and configured to extrude a molded article from the mold,
   in which the rotary platen is disposed at a side of a surface of the one platen facing the other platen to face the one platen, the rotary platen being provided to be rotatable via a bearing structure,
   in which the extrusion device is disposed on a surface of the one platen opposite to the surface facing the other platen,
   in which the bearing structure is configured to bear the rotary platen at a position away from a rotation center in a radial direction, and
   in which the extrusion device is provided with an ejector rod that protrudes radially inward than the bearing structure.
<2> The mold clamping device according to <1>,
   in which a cylindrical protrusion is fixedly installed on the surface of the one platen facing the other platen,
   in which a circular recess for accommodating the protrusion is formed on a surface of the rotary platen facing the one platen, and
   in which the bearing structure connects the one platen and the rotary platen to each other in a circumferential portion of the protrusion and a circumferential portion of the recess.
<3> The mold clamping device according to <1> or <2>, in which the extrusion device is provided to the one platen on the surface opposite to the surface facing the other platen, radially inward than the bearing structure.
<4> The mold clamping device according to <3>, in which all ejector rods of the extrusion device protrude radially inward than the bearing structure.
<5> The mold clamping device according to any one of <1> to <4>, in which the bearing structure is a cross roller ring, the cross roller ring including: an inner ring; an outer ring that is rotatable relative to the inner ring; and a plurality of rollers that are provided between the inner ring and the outer ring.
<6> The mold clamping device according to any one of <1> to <5>, in which a friction reducing plate-form member is provided on a surface of either the rotary platen or the one platen, which surface faces the other.
<7> The mold clamping device according to any one of <1> to <6>, in which the one platen is the movable platen, and the other platen is the fixed platen.
<8> An injection molding machine including:
   a mold clamping device configured to clamp a mold; and
   an injection device configured to inject an injection material,
   in which the mold clamping device includes:
      a fixed platen;
      a movable platen configured to move closer toward or away from the fixed platen;
      a rotary platen provided on one platen of the fixed platen and the movable platen, a mold being attachable to the rotary platen; and
      an extrusion device provided on the one platen and configured to extrude a molded article from the mold,
   in which the rotary platen is disposed at a side of a surface of the one platen facing the other platen to face the one platen, the rotary platen being provided to be rotatable via a bearing structure,
   in which the extrusion device is disposed on a surface of the one platen opposite to the surface facing the other platen,
   in which the bearing structure is configured to bear the rotary platen at a position away from a rotation center in a radial direction, and
   in which the extrusion device is provided with an ejector rod that protrudes radially inward than the bearing structure.
<9> The injection molding machine according to <8>,
   in which a cylindrical protrusion is fixedly installed on the surface of the one platen facing the other platen,
   in which a circular recess for accommodating the protrusion is formed on a surface of the rotary platen facing the one platen, and
   in which the bearing structure connects the one platen and the rotary platen to each other in a circumferential portion of the protrusion and a circumferential portion of the recess.
<10> The injection molding machine according to <8> or <9>, in which the extrusion device is provided to the one platen on the surface opposite to the surface facing the other platen, radially inward than the bearing structure.
<11> The injection molding machine according to <10>, in which all ejector rods of the extrusion device protrude radially inward than the bearing structure.
<12> The injection molding machine according to any one of <8> to <11>, in which the bearing structure is a cross roller ring including: an inner ring; an outer ring that is rotatable relative to the inner ring; and a plurality of rollers that are provided between the inner ring and the outer ring.
<13> The injection molding machine according to any one of <8> to <12>, in which a friction reducing plate-form member is provided on a surface of either the rotary platen or the one platen, which faces the other.
<14> The injection molding machine according to any one of <8> to <13>, in which the one platen is the movable platen, and the other platen is the fixed platen.

### ADVANTAGEOUS EFFECTS OF INVENTION

According to the present disclosure, it is possible to provide a mold clamping device in which a protruding position of an ejector rod is not restricted, and an injection molding machine.

### BRIEF DESCRIPTION OF DRAWINGS

[FIG. 1] FIG. 1 is a side view of an injection molding machine according to the present illustrative embodiment.
[FIG. 2] FIG. 2 is a front view showing a rotary platen and a part of a mold clamping device according to the present illustrative embodiment.
[FIG. 3] FIG. 3 is a side sectional view showing a movable platen, the rotary platen, and an extrusion device according to the present illustrative embodiment.
[FIG. 4] FIG. 4 is a perspective view showing a cross roller ring provided on the rotary platen according to the present illustrative embodiment in a partial cross section.
[FIG. 5] FIG. 5 is a side sectional view showing a movable platen, a rotary platen, and an extrusion device in the related art.
[FIG. 6] FIG. 6 is a side sectional view showing a movable platen, a rotary platen, and an extrusion device according to a second illustrative embodiment.
[FIG. 7] FIG. 7 is a side sectional view showing a movable platen, a rotary platen, and an extrusion device according to a third illustrative embodiment.

### DESCRIPTION OF EMBODIMENTS

Hereinafter, specific illustrative embodiments will be described in detail with reference to the drawings. However, the present invention is not limited to the following illustrative embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

The present illustrative embodiment will be described.

A mold clamping device according to an illustrative embodiment of the present invention includes:
a fixed platen;
a movable platen configured to move closer toward or away from the fixed platen;
a rotary platen provided on one platen of the fixed platen and the movable platen, a mold being attachable to the rotary platen; and
an extrusion device provided on the one platen and configured to extrude a molded article from the mold,
in which the rotary platen is disposed at a side of a surface of the one platen facing the other platen to face the one platen, the rotary platen being provided to be rotatable via a bearing structure,
in which the extrusion device is disposed on a surface of the one platen opposite to the surface facing the other platen,
in which the bearing structure is configured to bear the rotary platen at a position away from a rotation center in a radial direction, and
in which the extrusion device is provided with an ejector rod that protrudes radially inward than the bearing structure.

An injection molding machine according to an illustrative embodiment of the present invention includes:
a mold clamping device configured to clamp a mold; and
an injection device configured to inject an injection material,
in which the mold clamping device includes:
   a fixed platen;
   a movable platen configured to move closer toward or away from the fixed platen;
   a rotary platen provided on one platen of the fixed platen and the movable platen, a mold being attachable to the rotary platen; and
   an extrusion device provided on the one platen and configured to extrude a molded article from the mold,
in which the rotary platen is disposed at a side of a surface of the one platen facing the other platen to face the one platen, the rotary platen being provided to be rotatable via a bearing structure,
in which the extrusion device is disposed on a surface of the one platen opposite to the surface facing the other platen,
in which the bearing structure is configured to bear the rotary platen at a position away from a rotation center in a radial direction, and
in which the extrusion device is provided with an ejector rod that protrudes radially inward than the bearing structure.

In an illustrative embodiment of the present invention, it is preferable that the one platen is the movable platen, and the other platen is the fixed platen.

### <Injection Molding Machine>

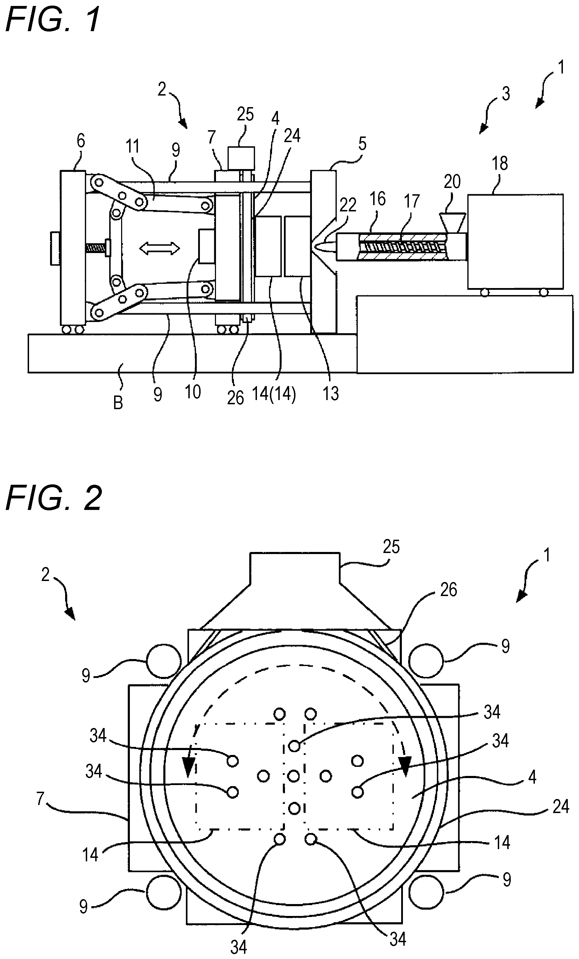

As shown in FIG. 1, an injection molding machine 1 according to the present illustrative embodiment includes a mold clamping device 2 configured to clamp a mold, an injection device 3 configured to melt and inject an injection material, a rotary platen 4 provided on the mold clamping device 2, and an extrusion device 10 for extruding a molded article.

### <Mold Clamping Device>

The mold clamping device 2 includes a fixed platen 5 fixed on a bed B, a mold clamping housing 6 that slides on the bed B, and a movable platen 7 that also slides on the bed B. The fixed platen 5 and the mold clamping housing 6 are coupled by a plurality of, for example, four tie bars 9, 9 ... The movable platen 7 is slidable between the fixed platen 5 and the mold clamping housing 6. A mold clamping mechanism 11 is provided between the mold clamping housing 6 and the movable platen 7. The mold clamping mechanism 11 may be implemented by a direct pressure type mold clamping mechanism, that is, a mold clamping cylinder. In the present illustrative embodiment, the mold clamping mechanism 11 is implemented by a toggle mechanism.

As will be described in detail later, the rotary platen 4 according to the present illustrative embodiment is provided on the movable platen 7. The fixed platen 5 is provided with a fixed-side mold 13. The rotary platen 4 is provided with two rotary-side molds 14, 14. In FIG. 1, the two rotary-side molds 14, 14 attached to the rotary platen 4 are provided on a front side and a back side of the paper surface, and are shown in an overlapping manner. One of the two rotary-side molds 14, 14 is aligned with the fixed-side mold 13 according to a rotation position of the rotary platen 4. When the mold clamping mechanism 11 is driven, the fixed-side mold 13 and one rotary-side mold 14 aligned therewith are opened and closed.

Similarly, as will be described in detail later, the extrusion device 10 is also provided on the movable platen 7. Specifically, the extrusion device 10 is provided on the movable platen 7 not on the surface where the rotary platen 4 is provided but on a surface opposite thereto. The extrusion device 10 extrudes a molded article formed in the rotary-side molds 14, 14.

### <Injection Device>

The injection device 3 includes a heating cylinder 16, a screw 17 inserted in the heating cylinder 16, and a screw driving device 18 configured to drive the screw 17. A hopper 20 is provided in the vicinity of a rear end portion of the heating cylinder 16. An injection nozzle 22 is provided at a tip end of the heating cylinder 16.

### <Rotary Platen>

The rotary platen 4 is provided on the movable platen 7 as described above. FIG. 2 shows the rotary platen 4 and the movable platen 7 when viewed from a direction perpendicular to the rotary platen 4. The rotary platen 4 rotates smoothly with respect to the movable platen 7. A rotary platen driving mechanism 25 is provided above the movable platen 7. A pulley 24 having a diameter slightly larger than that of the rotary platen 4 is fixed to the rotary platen 4. As shown in FIGS. 1 and 2, a belt 26 is wound around the pulley 24 and the rotary platen driving mechanism 25. When the rotary platen driving mechanism 25 is driven, the pulley 24 and the rotary platen 4 rotate integrally.

In the illustrative embodiment of the present invention, it is preferable that a friction reducing plate-form member is provided on a surface of either one of the rotary platen and the one platen provided with the rotary platen facing the other.

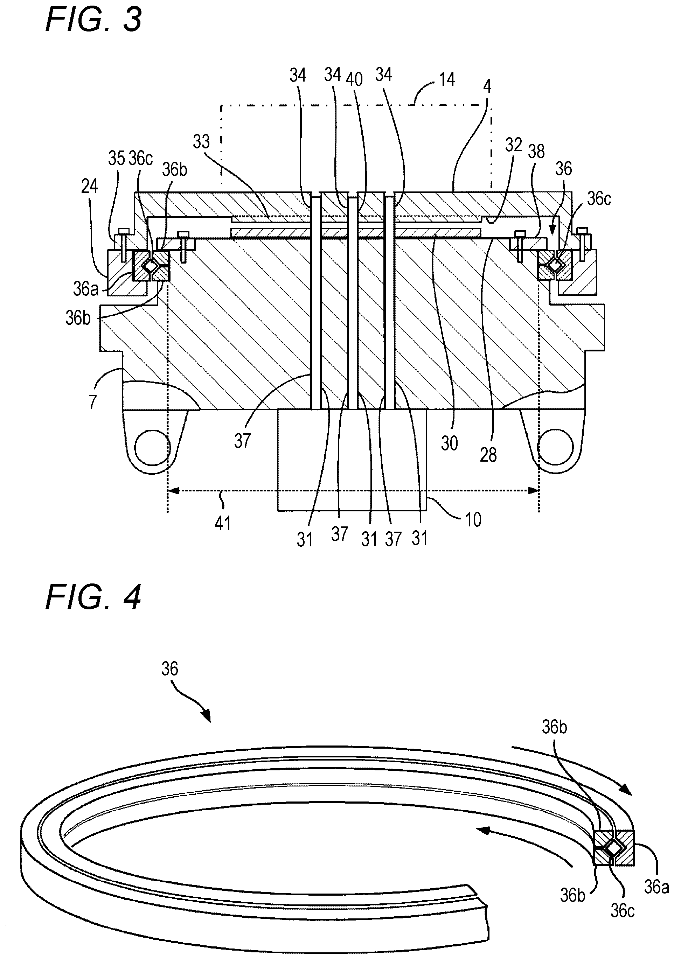

As shown in FIG. 3, the movable platen 7 is formed with a protrusion 28 that rises in a cylindrical shape at a central portion thereof. The protrusion 28 is formed on a surface of the movable platen 7 closer to the fixed platen 5 (see FIG. 1). The friction reducing plate-form member is provided on an upper surface of the protrusion 28. In the present illustrative embodiment, the friction reducing plate-form member is made of a wear plate 30 formed by sintering a solid lubricant mainly composed of graphite uniformly dispersed in an alloy.

A diameter of the protrusion 28 is smaller than a diameter of the rotary platen 4, but is sufficiently large in the movable platen 7, and the protrusion 28 largely occupies a central portion of the movable platen 7. Further, an area of the wear plate 30 also increases. At the time of mold clamping, the rotary platen 4 is slightly elastically deformed by a mold clamping force received from the rotary-side mold 14, and comes into close contact with the wear plate 30. Since the protrusion 28 and the wear plate 30 have a sufficiently large area, the mold clamping force appropriately acts on the movable platen 7.

With respect to such a movable platen 7, the rotary platen 4 is formed with a circular recess 32 on a side facing the movable platen 7 as shown in FIG. 3. The protrusion 28 of the movable platen 7 is accommodated in the recess 32. By forming such a recess 32, a flange portion 35 is formed on a circumferential portion of the rotary platen 4.

A slightly raised base portion 33 is formed on a surface of the recess 32, that is, on a surface of the rotary platen 4 that faces the wear plate 30. A slight gap is secured between the base portion 33 and the wear plate 30 so as not to come into contact with each other when the rotary platen 4 rotates. However, at the time of mold clamping, the rotary platen 4 is slightly elastically deformed by the mold clamping force received from the rotary-side mold 14, and the base portion 33 and the wear plate 30 are brought into close contact with each other. That is, it is described above that the rotary platen 4 comes into close contact with the wear plate 30 during mold clamping, and the rotary platen 4 comes into close contact with the wear plate 30 at the base portion 33.

### <Bearing Structure>

In the illustrative embodiment of the present invention, it is preferable that a cylindrical protrusion is fixedly installed to the one platen, to which the rotary platen is provided, on the surface facing the other platen, a circular recess for accommodating the protrusion is formed on a surface of the rotary platen which faces the one platen, and the bearing structure connects the one platen and the rotary platen to each other in a circumferential portion of the protrusion and a circumferential portion of the recess.

The rotary platen 4 according to the present illustrative embodiment is rotatably supported by a bearing structure 36 on the flange portion 35 thereof with respect to the cylindrical protrusion 28 of the movable platen 7. That is, the bearing structure 36 is provided not in the vicinity of the center but on a peripheral portion of the rotary platen 4. In other words, the bearing structure 36 bears the rotary platen 4 with respect to the movable platen 7 at a position away from a rotation center of the rotary platen 4 in a radial direction. Therefore, as will be explained later, there are no restrictions on the arrangement of ejector rods 37, 37, ...

In the illustrative embodiment of the present invention, it is preferable that the bearing structure is a cross roller ring including an inner ring, an outer ring that is rotatable relative to the inner ring, and a plurality of rollers provided between the inner ring and the outer ring.

In the present illustrative embodiment, the bearing structure 36 is implemented by a cross roller ring 36 shown in FIG. 4. The cross roller ring 36 is a bearing component having a special shape. The cross roller ring 36 has a ring shape as a whole. The cross roller ring 36 includes an outer ring 36a, a pair of inner rings 36b, 36b, and a large number of rollers 36c, 36c, ... interposed therebetween. The rollers 36c, 36c, ... have a cylindrical shape and roll between the outer ring 36a and the pair of inner rings 36b, 36b. Therefore, in the cross roller ring 36, the pair of inner rings 36b, 36b rotate smoothly relative to the outer ring 36a.

As shown in FIG. 3, the cross roller ring 36 is provided on an outer periphery of the protrusion 28 of the movable platen 7. The pair of inner rings 36b, 36b are fixed by the pressing member 38. On the other hand, the outer ring 36a of the cross roller ring 36 is provided on the circumferential portion of the rotary platen 4. That is, the pulley 24 having a large diameter is provided on the flange portion 35 of the rotary platen 4. The outer ring 36a is fixed by the flange portion 35 and the pulley 24. As a result, the rotary platen 4 can smoothly rotate relative to the movable platen 7.

### <Extrusion Device>

In the illustrative embodiment of the present invention, it is preferable that the extrusion device is provided to the one platen to which the rotary platen is provided on a surface opposite to the surface facing the other platen, radially inward than the bearing structure.

As shown in FIG. 3, the extrusion device 10 is provided on the surface of the movable platen 7 that is opposite to the surface to which the rotary platen 4 is provided. More specifically, the extrusion device 10 is provided at the central portion of the movable platen 7. This is because the rotary platen driving mechanism 25 (see FIGS. 1 and 2) for driving the rotary platen 4 does not interfere with the arrangement of the extrusion device 10.

The extrusion device 10 includes the plurality of ejector rods 37, 37, ... The movable platen 7 has ejector rod holes 31, 31, ... The rotary platen 4 also has ejector rod holes 34, 34, ... The ejector rods 37, 37, ... are inserted into the ejector rod holes 31, 31, ... When the rotary platen 4 is at an appropriate rotation position, the ejector rod holes 31, 31, ... are aligned with the ejector rod holes 34, 34, ... When the ejector rods 37, 37, ... protrude from the extrusion device 10, the molded article is extruded from the rotary-side mold 14.

In the illustrative embodiment of the present invention, it is preferable that all ejector rods of the extrusion device protrude radially inward than the bearing structure.

In the present illustrative embodiment, all of the ejector rods 37, 37, ... protrude radially inward than the bearing structure 36 in the movable platen 7 as indicated by reference numeral 41. As described above, in the present illustrative embodiment, the bearing structure 36 bearing the rotary platen 4 is provided on the circumferential portion of the rotary platen 4, so that the bearing structure 36 does not interfere with the arrangement of the ejector rods 37, 37, ... and there are no restrictions on the arrangement. Further, one of the ejector rods 37, 37, ... is provided at the rotation center of the rotary platen 4 as indicated by reference numeral 40 in FIG. 3.

### <Related-Art Rotary Platen>

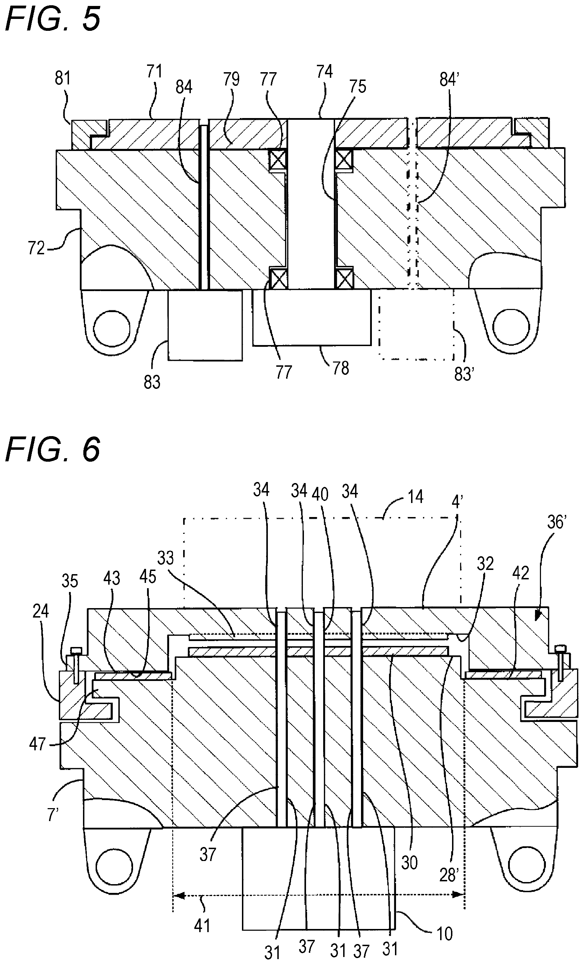

A movable platen 72 including a related-art rotary platen 71 is shown in FIG. 5. A rotary shaft 74 is fixed to the center of the related-art rotary platen 71. A through hole 75 is formed in the center of the movable platen 72, and the rotary shaft 74 is inserted into the through hole 75 via bearings 77 and 77. That is, the bearings 77 and 77 serve as bearing structures for rotatably bearing the rotary platen 71.

A drive mechanism 78 is provided at the center of a back surface of the movable platen 72, and rotates the rotary platen 71 is via the rotary shaft 74. The rotary platen 71 is pressed by a pressing member 81 provided on a front surface of the movable platen 72 so as not to be released when the mold is opened.

In the movable platen 72 having the related-art rotary platen 71, the drive mechanism 78 of the rotary platen 71 is disposed at the center as described above. Therefore, an extrusion device 83 needs to be placed on the back surface of the movable platen 72, avoiding the drive mechanism 78. Since the extrusion device 83 cannot be disposed in the center in this way, there is a restriction on the arrangement of an ejector rod 84. Further, since the rotary shaft 74 of the rotary platen 71 is provided at the center of the movable platen 72, the extrusion device 83 cannot protrude from a rotation center of the rotary platen 71. As indicated by a two-dot chain line, a second extrusion device 83' may be provided. In this case, a degree of freedom in arrangement of ejector rods 84 and 84' is slightly increased. However, if a plurality of extrusion devices 83 and 83' are provided, the cost increases.

In the movable platen 7 including the rotary platen 4 (see FIG. 3) according to the present illustrative embodiment, there are no restrictions on the arrangement of the ejector rods 37, 37, ... as described above, and such a problem in the related art is solved.

### <Second Illustrative Embodiment>

The present illustrative embodiment can be variously modified. FIG. 6 shows a movable platen 7', a rotary platen 4', and the extrusion device 10 according to a second illustrative embodiment. Components and members similar to those of the rotary platen 4 and the movable platen 7 according to the first illustrative embodiment are denoted by the same reference numerals, and description thereof is omitted.

In the second illustrative embodiment, a step portion 42 is formed around a cylindrical protrusion 28' on the movable platen 7'. The step portion 42 is provided with wear plates 43 and 43. On the other hand, a slide portion 45 having a donut shape is formed around the circular recess 32 on the rotary platen 4'. The slide portion 45 slides on the wear plates 43 and 43 of the step portion 42. That is, a bearing structure 36' connecting the rotary platen 4' and the movable platen 7' in the second illustrative embodiment is a sliding bearing including the step portion 42, the wear plates 43 and 43, and the slide portion 45. The bearing structure 36' is also provided on the rotary platen 4' at a circumferential portion away from a rotation center in a radial direction. Therefore, there are no restrictions on the arrangement of the ejector rods 37, 37, ..., and all of the ejector rods 37, 37, ... protrude radially inward than the bearing structure 36'.

In the second illustrative embodiment, a collar portion 47 is formed in the step portion 42 formed in the movable platen 7'. The rotary platen 4' and the pulley 24 sandwich the collar portion 47. Accordingly, the rotary platen 4' does not separate from the movable platen 7' when the mold is opened.

### <Third Illustrative Embodiment>

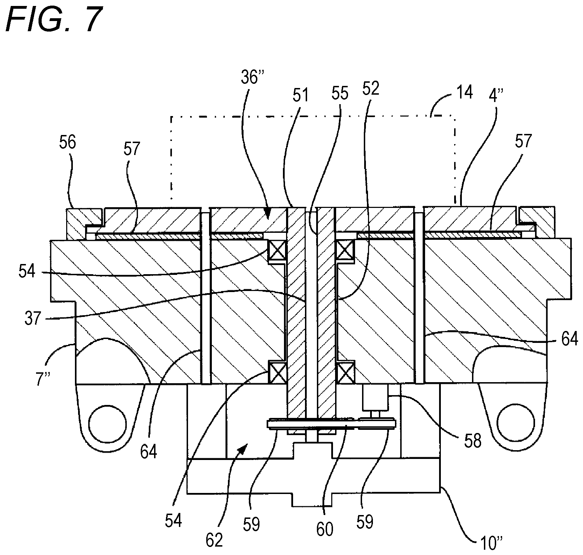

FIG. 7 shows a movable platen 7", a rotary platen 4", and an extrusion device 10" according to a third illustrative embodiment. Components and members similar to those of the rotary platen 4, the movable platen 7, and the extrusion device 10 according to the first illustrative embodiment are denoted by the same reference numerals, and description thereof is omitted.

In the third illustrative embodiment, the rotary platen 4" includes a rotary shaft 51, similar to the related-art rotary platen 71 (see FIG. 5). However, the rotary shaft 51 is formed in a hollow shape. A through hole 52 is formed in the center of the movable platen 7", and the rotary shaft 51 of the rotary platen 4" is inserted into the through hole 52. The rotary shaft 51 is rotatably supported in the through hole 52 via bearings 54, 54. That is, the bearings 54 and 54 constitute a bearing structure 36" for bearing the rotary platen 4". As will be described later, a hollow hole of the rotary shaft 51 is a rod hole 55, so that one ejector rod 37 protrudes. The rod hole 55 is provided at a rotation center of the rotary platen 4". It can then be said that the bearing structure 36" is bearing at a position away from the rotation center in a radial direction.

In the third illustrative embodiment, an outer periphery of the rotary platen 4" is pressed by a pressing member 56. A wear plate 57 is provided on the movable platen 7", and the rotary platen 4" slides smoothly on the wear plate 57. In this illustrative embodiment, the rotary shaft 51, that is, the rotary platen 4" is rotated by a drive mechanism 62 that includes a servo motor 58, pulleys 59 and 59, and a timing belt 60.

In the third illustrative embodiment, the extrusion device 10" is provided on the movable platen 7" so as to cover the drive mechanism 62. The extrusion device 10" includes a plurality of ejector rods 37, 64, and 64. One ejector rod 37 passes through the rod hole 55 and protrudes from the rotation center of the rotary platen 4". That is, the ejector rod 37 protrudes radially inward than the bearing structure 36". Other ejector rods 64 and 64 are arranged radially outward than the bearing structure 36". In the third illustrative embodiment, it can also be said that there is no restriction on the arrangement of the ejector rods 37, 64, and 64.

### <Other Modifications>

The illustrative embodiments can be further modified in various ways. In the first to third illustrative embodiments, the rotary platens 4, 4', ... and the extrusion devices 10, 10" are described as being provided on the movable platens 7, 7', ... However, the rotary platens 4, 4', ... and the extrusion devices 10, 10" may be provided on another platen. Specifically, the rotary platens 4, 4', ... and the extrusion devices 10, 10" may be provided on the fixed platen 5. That is, the rotary platens 4, 4', ... are rotated relative to the fixed platen 5.

Further, modifications of the wear plate 30 and the like are also possible. In the rotary platen 4 (see FIG. 3) according to the present illustrative embodiment, it has been described that the wear plate 30 and the base portion 33 are not in contact with each other at the time of rotation, and are in close contact with each other at the time of mold clamping. However, the wear plate 30 and the base portion 33 may slide at the time of rotation. Further, the wear plate 30 is not an essential member, and the formation of the base portion 33 is also not essential.

Although the invention made by the present inventors is specifically described based on the illustrative embodiments, it is needless to say that the present invention is not limited to the illustrative embodiments described above, and various modifications can be made without departing from the scope of the invention. The plurality of examples described above may be appropriately combined.

### INDUSTRIAL APPLICABILITY

According to the present disclosure, it is possible to provide a mold clamping device in which a protruding position of an ejector rod is not restricted, and an injection molding machine.

Although the present invention has been described in detail with reference to a specific illustrative embodiment, it will be apparent to those skilled in the art that various changes and modifications can be made without departing from the spirit and scope of the present invention.

The present application is based on Japanese Patent Application No. 2021-117659 filed on July 16, 2021, and the contents thereof are incorporated herein as reference.

### REFERENCE SIGNS LIST

- 1: Injection molding machine
- 2: Mold clamping device
- 3: Injection device
- 4: Rotary platen
- 5: Fixed platen
- 6: Mold clamping housing
- 7: Movable platen
- 9: Tie bar
- 10: Extrusion device
- 11: Mold clamping mechanism
- 13: Fixed-side mold
- 14: Rotary-side mold
- 16: Heating cylinder
- 17: Screw
- 18: Screw driving device
- 20: Hopper
- 22: Inj ection nozzle
- 24: Pulley
- 25: Rotary platen driving mechanism
- 26: Belt
- 28: Protrusion
- 30: Wear plate
- 36a: Outer ring
- 36b: Inner ring
- 36c: Roller
- 31: Ejector rod hole
- 32: Recess
- 33: Base portion
- 34: Ejector rod hole
- 35: Flange portion
- 36: Cross roller ring, bearing structure
- 37: Ejector rod
- 38: Pressing member
- 42: Step portion
- 43: Wear plate
- 45: Slide portion
- 47: Collar portion
- 51: Rotary shaft
- 52: Through hole
- 54: Bearing
- 55: Rod hole
- 56: Pressing member
- 57: Wear plate
- 58: Servo motor
- 59: Pulley
- 60: Timing belt
- 62: Drive mechanism
- 64: Ejector rod
- B: Bed
- 71: Rotary platen
- 72: Movable platen
- 74: Rotary shaft
- 75: Through hole
- 77: Bearing
- 78: Drive mechanism
- 81: Pressing member
- 83, 83': Extrusion device
- 84, 84': Ejector rod

## Claims

1. A mold clamping device comprising:
a fixed platen;
a movable platen configured to move closer toward or away from the fixed platen;
a rotary platen provided on one platen of the fixed platen and the movable platen, a mold being attachable to the rotary platen; and
an extrusion device provided on the one platen and configured to extrude a molded article from the mold,
wherein the rotary platen is disposed at a side of a surface of the one platen facing the other platen to face the one platen, the rotary platen being provided to be rotatable via a bearing structure,
wherein the extrusion device is disposed on a surface of the one platen opposite to the surface facing the other platen,
wherein the bearing structure is configured to bear the rotary platen at a position away from a rotation center in a radial direction, and
wherein the extrusion device is provided with an ejector rod that protrudes radially inward than the bearing structure.

2. The mold clamping device according to claim 1,
wherein a cylindrical protrusion is fixedly installed on the surface of the one platen facing the other platen,
wherein a circular recess for accommodating the protrusion is formed on a surface of the rotary platen facing the one platen, and
wherein the bearing structure connects the one platen and the rotary platen to each other in a circumferential portion of the protrusion and a circumferential portion of the recess.

3. The mold clamping device according to claim 1 or 2, wherein the extrusion device is provided to the one platen on the surface opposite to the surface facing the other platen, radially inward than the bearing structure.

4. The mold clamping device according to claim 3, wherein all ejector rods of the extrusion device protrude radially inward than the bearing structure.

5. The mold clamping device according to any one of claims 1 to 4, wherein the bearing structure is a cross roller ring, the cross roller ring including: an inner ring; an outer ring that is rotatable relative to the inner ring; and a plurality of rollers that are provided between the inner ring and the outer ring.

6. The mold clamping device according to any one of claims 1 to 5, wherein a friction reducing plate-form member is provided on a surface of either the rotary platen or the one platen, which surface faces the other.

7. The mold clamping device according to any one of claims 1 to 6, wherein the one platen is the movable platen, and the other platen is the fixed platen.

8. An injection molding machine comprising:
a mold clamping device configured to clamp a mold; and
an injection device configured to inject an injection material,
wherein the mold clamping device comprises:
a fixed platen;
a movable platen configured to move closer toward or away from the fixed platen;
a rotary platen provided on one platen of the fixed platen and the movable platen, a mold being attachable to the rotary platen; and
an extrusion device provided on the one platen and configured to extrude a molded article from the mold,
wherein the rotary platen is disposed at a side of a surface of the one platen facing the other platen to face the one platen, the rotary platen being provided to be rotatable via a bearing structure,
wherein the extrusion device is disposed on a surface of the one platen opposite to the surface facing the other platen,
wherein the bearing structure is configured to bear the rotary platen at a position away from a rotation center in a radial direction, and
wherein the extrusion device is provided with an ejector rod that protrudes radially inward than the bearing structure.

9. The injection molding machine according to claim 8,
wherein a cylindrical protrusion is fixedly installed on the surface of the one platen facing the other platen,
wherein a circular recess for accommodating the protrusion is formed on a surface of the rotary platen facing the one platen, and
wherein the bearing structure connects the one platen and the rotary platen to each other in a circumferential portion of the protrusion and a circumferential portion of the recess.

10. The injection molding machine according to claim 8 or 9, wherein the extrusion device is provided to the one platen on the surface opposite to the surface facing the other platen, radially inward than the bearing structure.

11. The injection molding machine according to claim 10, wherein all ejector rods of the extrusion device protrude radially inward than the bearing structure.

12. The injection molding machine according to any one of claims 8 to 11, wherein the bearing structure is a cross roller ring including: an inner ring; an outer ring that is rotatable relative to the inner ring; and a plurality of rollers that are provided between the inner ring and the outer ring.

13. The injection molding machine according to any one of claims 8 to 12, wherein a friction reducing plate-form member is provided on a surface of either the rotary platen or the one platen, which faces the other.

14. The injection molding machine according to any one of claims 8 to 13, wherein the one platen is the movable platen, and the other platen is the fixed platen.
